# EUROPEAN PATENT APPLICATION

(11) **EP 1 698 865 A2**
(43) Date of publication of application: **06.09.2006**
(21) Application number: 06003059.0
(22) Date of filing: 15.02.2006
(51) Int. Cl.: G01F 1/684, G01F 1/698

(54) **Heating resistor type air flow rate measuring device and method of correcting measurement error**

(30) Priority: 03.03.2005 JP 2005058757
(71) Applicant: HITACHI, LTD., Chiyoda-ku Tokyo 100-8280 (JP)
(72) Inventor: Kobayashi, Chihiro, Hitachi Ltd., Marunouchi 1-chom Chiyoda Tokyo 100-8220 (JP)
(74) Representative: Beetz & Partner

(57) **Abstract**

This invention relates to a measurement error attributable to intake air pulsation of a heating resistor type air flow rate measuring device is corrected. A measurement error correction method not dependent on an intake system of a vehicle is provided. An output from a sensing circuit (100) is sampled at prescribed time intervals. Output values thus sampled are successively converted to flow rate values. A first flow rate value is determined by averaging the flow rate values thus obtained in a prescribed amount of time. Separately, the output from the sensing circuit (100) is averaged for a prescribed amount of time. The average output value thus obtained is converted to a second flow rate value. A correction value for correcting a measurement error is determined based on a difference between the first and second flow rate values.

## Description

### FIELD OF THE INVENTION

The present invention relates to a device for measuring an air flow rate using a heating resistor, for example, a heating resistor type air flow rate measuring device suitable for measuring an intake air flow of an internal combustion engine of a vehicle. More particularly, it relates to correcting measurement errors attributable to an intake air pulsation flow.

### BACKGROUND OF THE INVENTION

A heating resistor type air flow rate measuring device has been known as technology for measuring an air flow of an internal combustion engine. It makes use of a phenomenon that heat drawn from a heating resistor increases monotonically relative to an air flow rate. Since it can directly measure a mass flow rate, it is widely used as a flow meter in connection with vehicle fuel control.

In a heating resistor type air flow rate measuring device, the output voltage of a sensing circuit varies nonlinearly with respect to the air flow rate. In an intake pipe where a heating resistor is disposed, a pulsation flow' is generated by opening and closing movements of intake and exhaust valves.

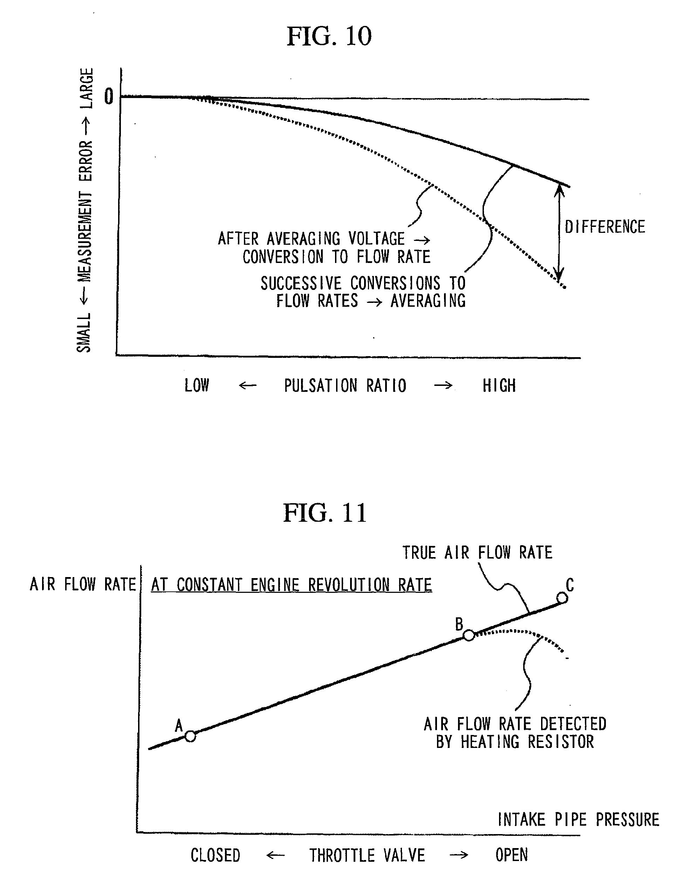

In such type of an air flow rate measuring device, a pulsation flow and output nonlinearity cause measurement errors with the flow rate measurement growing increasingly smaller than the actual flow rate as the pulsation flow grows larger as shown in FIG. 10. In FIG. 11, the horizontal axis represents the throttle valve opening and intake pipe pressure varying at a constant engine revolution rate, and the vertical axis represents the air flow rate. As the throttle valve is opened wider (as load increases), the intake air pulsation increases even while the engine revolution rate is unchanged. If the intake air pulsation becomes larger than in the state shown in FIG. 11 causing a backflow to be generated in the intake pipe, the backflow causes measurement errors such that measured air flow rates are larger than actual air flow rates.

Delay in response of a heating resistor occurring when a pulsation flow is present also causes air flow measurement errors. If the output of the heating resistor is successively converted to flow rate values without involving delay in responding to true changes in flow speed caused by the pulsation flow, such measurement errors do not occur.

In reality, however, for the following reasons, it is difficult to eliminate delay in response of the output of a heating resistor. A heating resistor disposed in an intake pipe is required to be mechanically vibration-resistant while preventing deposition of fine dust coming through an air cleaner. To improve heating resistor reliability, heating wire to make up a heating resistor is wound around a bobbin-like part and the heating resistor is coated to enhance its mechanical strength. Such measures, however, cause the bobbin-like part and the coating material to be subjected to heating by the heating wire. This increases the heat capacity of a portion including the heating resistor. Consequently, due to a thermal delay of the heating resistor, measurement delays occur with respect to true intake air pulsations. Air flow rate values obtained by successively converting such delayed output voltage inevitably contain measurement errors.

To control an internal combustion engine, it is necessary to perform calibration by measuring measurement errors and determining correction values beforehand. An example of such calibration work is described in JP-A No. 105781/1996. According to JP-A No. 105781/1996, prior to shipment of a vehicle, correction values for correcting air flow measurement errors dependent on the engine revolution rate and accelerator opening are determined and mapped for the intake system of the vehicle. Namely, for conditions (engine revolution rates and accelerator opening degrees) which cause flow rate measurements to be smaller than actual air flow rates, correction values to be added to the flow rate measurements are determined and mapped. Similarly, for conditions (engine revolution rates and accelerator opening degrees) which cause flow rate measurements to be larger than actual air flow rates, correction values to be subtracted from the flow rate measurements are determined and mapped.

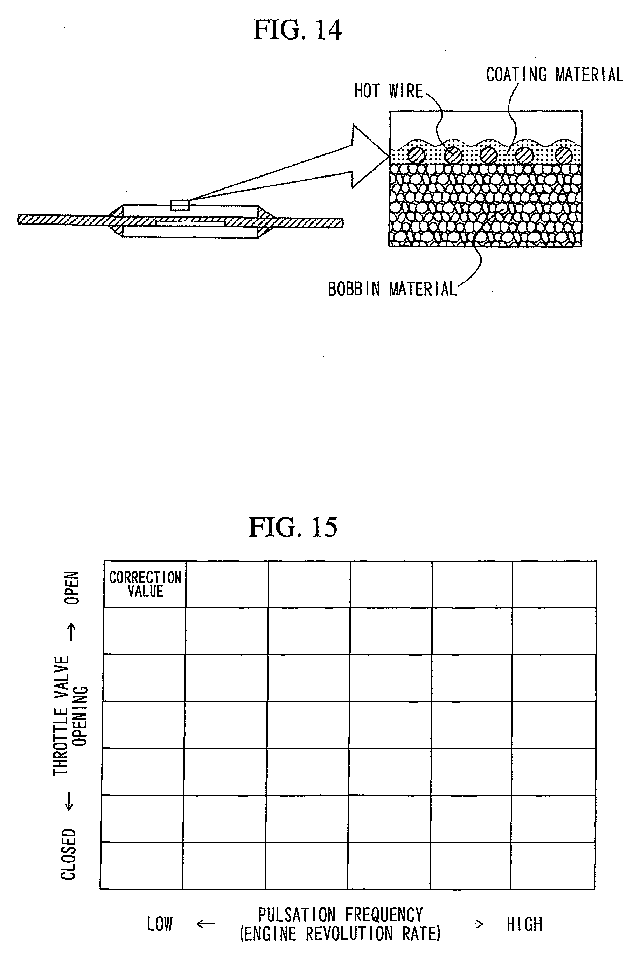

In the above method, a map like the one shown in FIG. 15 is generated. Measurement error correction values are laid out in the map with the horizontal axis representing the engine revolution rate (pulsation frequency) and the vertical axis representing the degree of throttle opening.

The pulsation flow is dependent on the length of an intake pipe. If, in the process of developing a vehicle, the length of the intake pipe is changed, the engine revolution rate at which flow pulsation becomes large also changes. Hence, it is necessary to perform calibration every time the length of the intake pipe is changed. Since the resonance frequency of a pipe line is dependent on the length of the pipe line, changing the length of the intake pipe or the position of a heating resistor in the intake pipe changes measurement errors of the heating resistor type air flow rate measuring device.

Also, when the atmospheric pressure or temperature changes while the engine is running, the resonance frequency of the pulsation changes thereby causing the relationship between the engine revolution rate, accelerator opening degree and intake air pulsation ratio to also change. Consequently, measurement errors also change, and it may occur that air flow measurement errors are not properly corrected.

For the above reasons, it is desirable that, in correcting pulsation-induced measurement errors of a heating resistor type air flow rate measuring device, changes made to the intake system of the engine and external factors such as the atmospheric pressure and temperature be taken into consideration.

JP-A No. 536320/2004 describes an error correction method devised by taking note of a phenomenon that an air mass sensor causes dynamic output errors dependent on a pulsation flow, particularly, due to resonance. In the method, a sensor output signal is supplied to a filter circuit and a correction circuit, then the correction circuit, using information supplied to the filter circuit, generates a corrected sensor signal. In concrete terms, a correction signal is generated by multiplying a difference signal, representing a difference between a sensor output signal and a filter output signal (that is, the sensor output signal having passed a low-pass filter), by a coefficient, and the correction signal is added to the sensor output signal.

### SUMMARY OF THE INVENTION

An object of the present invention is to correct pulsation-induced measurement errors of a heating resistor type air flow rate measuring device. More particularly, the present invention aims at providing a measurement error correction method and an instrument which are not affected by changes made to the intake system of a vehicle and external factors such as the atmospheric pressure and temperature. Another object of the present invention is to make it possible to estimate air flow measurement errors without using a low-pass filter, unlike in the method described in JP-A No. 536320/2004.

Basically, according to the present invention, in an air flow measuring instrument which measures an air flow rate using a temperature-dependent heating resistor, an output from a sensing circuit including the heating resistor may be converted to flow rate values by two or more methods, and/or a difference between the flow rate values obtained by the two or more methods may be used to correct a measurement error.

For example, the output from the sensing circuit including the heating resistor may be converted to flow rate values by two methods; based on a difference between the two flow rate values obtained by the two methods, a current measurement error of the air flow rate measuring device may be determined (for example, by the heating resistor type air flow rate measuring device itself or by an engine control unit); and/or the measurement error thus determined may be used for measurement error correction.

The inventors took note of a phenomenon that the difference between flow rate values determined, based on a sensor output of a sensing circuit of an heating resistor type air flow rate measuring device, using different flow rate measuring systems (that is, using different processes for converting the sensor output to flow rates) varies with the magnitude of measurement errors of the air flow rate measuring device. As a result, they devised a method to correct measurement errors based on a predetermined relationship between the difference and air flow measurement errors.

In other words, according to the present invention, an output of a sensing circuit which may include a heating resistor of an air flow measuring instrument may be converted to flow rate values by two or more methods, and/or a measurement error of the air flow measuring instrument is corrected based on the difference between the flow rate values obtained by the two or more methods.

According to the present invention, preparing a map or a formula representing relationship between the difference between flow rate values obtained by plural methods (the difference represents a measurement error which varies depending on the state of a pulsation stream) and correction values for correcting measurement errors of an air flow measuring instrument makes it possible to correct measurement errors of the air flow measuring instrument. In this way, measurement error correction is not dependent on the intake system involved, so that, even if changes are made to the intake system, it is not necessary, unlike in conventional cases, to perform recalibration.

Also, even if the atmospheric pressure or temperature changes while an engine is running and, as a result, the pulsation resonance frequency changes causing the relationship between the engine revolution rate, accelerator opening degree and intake air pulsation ratio to also change, air flow rate measurement errors can be properly corrected.

The above features may be combined partly or as a whole in any way.

### BRIEF DESCRIPTION OF THE DRAWINGS

FIG. 1 is a schematic diagram of a heating resistor type air flow rate measuring device according to an embodiment of the present invention;
FIG. 2 is a flowchart for executing a correction method according to the present invention;
FIG. 3 is a graph showing relationship between the difference between flow rate values obtained by two conversion methods, which are used to perform the correction method according to the present invention, and the correction value;
FIG. 4 is a side elevation showing a heating resistor type air flow rate measuring device according to the present invention as viewed from an upstream side;
FIG. 5 is a cross-section showing the thermal type air flow measuring instrument shown in FIG. 4 as viewed in a direction along the air passage;
FIG. 6 is a schematic system diagram showing an internal combustion engine of an electronic fuel injection type to which the present invention is applied;
FIG. 7 is a graph showing the difference between flow rate values obtained, in a state where a heating resistor is disposed in a curved passage and a pulsation flow includes a backflow, by two conversion-to-flow-rate methods and the correction value (based on actual measurement);
FIG. 8 is a diagram showing relationship between the output voltage including pulsation-induced errors of a heating resistor type air flow rate measuring device and the air flow rate;
FIG. 9 is a diagram showing the pulsation ratio representing pulsation magnitude;
FIG. 10 is a graph showing relationship between the pulsation ratio and errors by conversion-to-flow-rate methods;
FIG. 11 is a graph showing relationship between the throttle valve opening in a vehicle and the measurement error;
FIG. 12 shows pulsation waveforms observed at points A to C shown in FIG. 11;
FIG. 13 is a diagram showing pulsation-induced errors of a heating resistor type air flow rate measuring device;
FIG. 14 is a diagram showing a heating resistor configuration; and
FIG. 15 represents conventional technique for correcting measurement errors of a heating resistor type air flow rate measuring device.

### DETAILED DESCRIPTION OF THE PREFERRED EMBODIMENT

A preferred mode for carrying out the present invention will be described with reference to an example of embodiment shown in drawings.

An embodiment of the present invention will be described in detail with reference to the accompanying drawings.

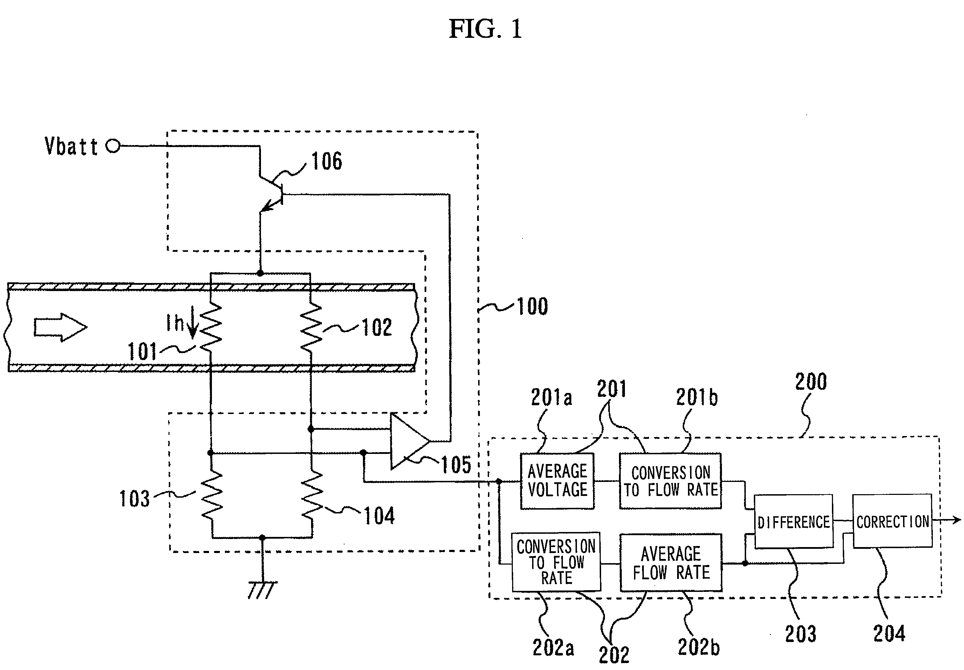

FIG. 1 is a schematic diagram of a heating resistor type air flow rate measuring device according to an embodiment of the present invention. Shown in the figure is an example of an instrument for measuring an air flow rate in an intake pipe of an automobile.

First, a principle of operation of the heating resistor type air flow rate measuring device will be described.

A sensing circuit (drive circuit) 100 of the heating resistor type air flow rate measuring device includes, broadly classified, a bridge circuit and a feedback circuit.

The bridge circuit includes a heating resistor 101 for measuring an intake air flow rate, a resistor 102 for intake air temperature compensation, and fixed resistors 103 and 104. The heating resistor 101 and the temperature compensation resistor 102 are each made of a temperature sensing resistor which is temperature-dependent. They are disposed in an intake pipe. The feedback circuit includes an operational amplifier 105 which inputs voltage between the heating resistor 101 and the fixed resistor 103 and between the temperature compensation resistor 102 and the fixed resistor 104, and a transistor 106 which controls current based on an output of the operational amplifier 105.

The bridge circuit and the feedback circuit are used to give feedback to the current flowing in the bridge circuit. That is, even if variations in air flow rate cause the quantity of heat drawn from the heating resistor 101 to change, the operational amplifier 105 and the transistor 106 work to apply a heating current Ih to the heating resistor 101 so as to maintain a constant temperature difference between the heating resistor 101 and the temperature compensation resistor 102. The heating current Ih is converted to voltage, and an output signal V2 dependent on the air flow rate is outputted. Namely, when the air flow is fast (flow rate is high), a large quantity of heat is drawn from the heating resistor 101, so that the heating current Ih is increased. When, on the other hand, the air flow is slow (flow rate is low), the quantity of heat drawn from the heating resistor 101 is small, so that the heating current Ih is decreased.

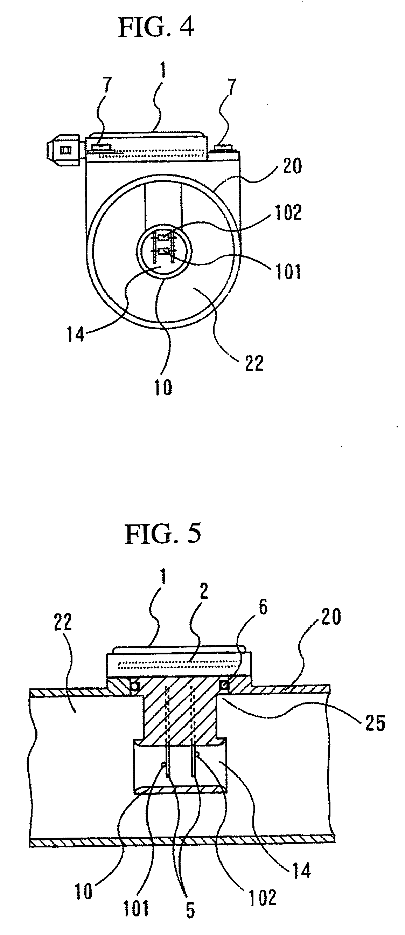

FIG. 5 is a transverse cross-section showing an example of a flow meter body used in the air flow rate measuring device of the present embodiment. FIG. 4 is a side elevation showing the flow meter body as viewed from the upstream side (from left in FIG. 5).

In the flow meter body, a sensing section 10 is disposed in a main air passage member 20 which makes up part of the intake pipe. The sensing section 10 has a subsidiary air passage member 14 and a housing member 1 for housing the sensing circuit (drive circuit). These members 1 and 14 are made of nonconductive material.

In the subsidiary air passage member 14, the heating resistor 101 for measuring an air flow rate and the air temperature compensation resistor 102 are supported via a conductive support member 5. The resistors 101 and 102 are electrically connected, via the support member 5, to a circuit board 2 disposed in the housing 1. The housing, circuit board, subsidiary air passage, heating resistor and temperature sensing resistor are united making up the heating resistor type air flow rate measuring device module.

A hole 25 is formed through a wall of the main air passage member 20. The subsidiary air passage member 14 is inserted from outside through the hole 25. The housing member 1 is fixed to the wall of the main air passage member 20 with screws 7. A seal material 6 is fitted between the subsidiary air passage member 14 and the main air passage member 20 to keep the intake pipe airtight.

A part denoted by the numeral 200 in FIG. 1 constitutes a section for correcting measurement errors of the heating resistor type air flow rate measuring device. It is made up of an electronic circuit unit such as an engine control unit or a special control unit for air flow rate measuring device. Before describing the electronic circuit unit 200 (equivalent to a correction part), pulsation-induced measurement errors of the heating resistor type air flow rate measuring device will be described with reference to FIGS. 11 to 14.

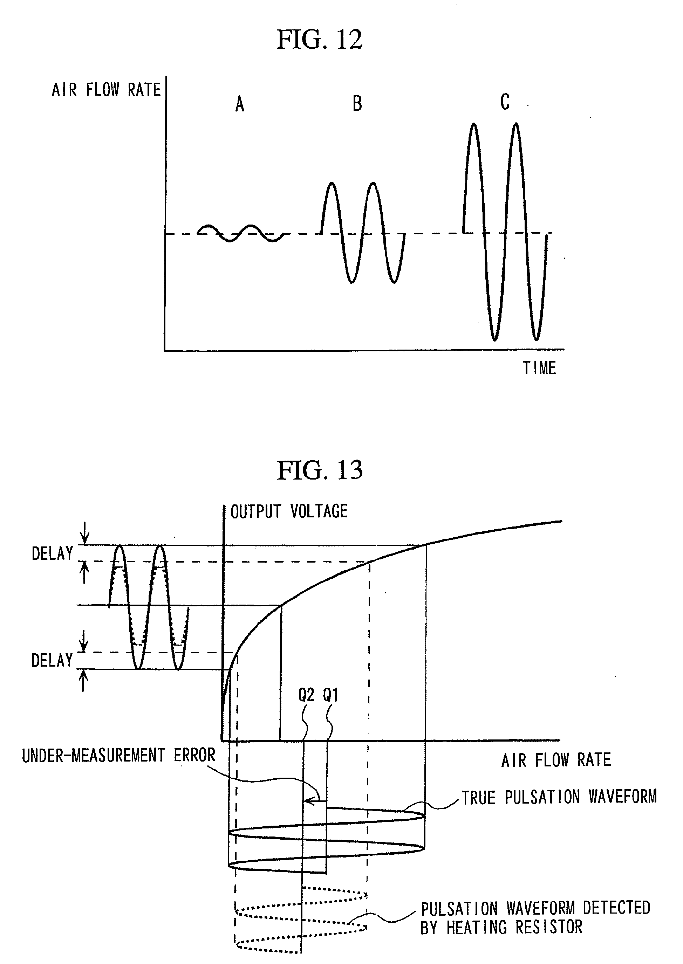

FIG. 11 is a graph with the vertical axis representing the throttle valve opening and intake pipe pressure and the horizontal axis representing the air flow rate (average value) measured, at a constant engine revolution rate, by the heating resistor type air flow rate measuring device. FIG. 12 shows pulsation waveforms observed at points A to C shown in FIG. 11. In FIG. 11, an intake pipe pressure with the throttle valve more closed is represented in a portion closer to the left end of the graph, and an intake pipe pressure with the throttle valve more open is represented in a portion closer to the right end of the graph. When the throttle valve is gradually opened with the engine running at a constant revolution rate, the intake air flow gradually and monotonically increases. The intake air pulsation has a small amplitude at point A, shown in FIG. 11, where the throttle valve opening is small. At point B, the pulsation amplitude is larger. At point C, the pulsation amplitude is as large as to bring down the air flow rate close to zero at lowest points of the amplitude waveform. Under such conditions, the air flow rate detected by the heating resistor type air flow rate measuring device does not monotonically increase even if the throttle valve opening is increased. As the pulsation amplitude further increases, measurement values become smaller than true air flow rates (under-measurement errors) as shown by a dotted-line curve in FIG. 11. This is because, as shown in FIG. 13, the output voltage of the heating resistor type air flow rate measuring device varies nonlinearly with respect to the air flow rate. Such measurement error would not arise if the heating resistor responds to the true flow velocity variations without delay and its output is successively converted into flow rates for the calculation of the average value. However, when there is a delay in the rate of response, the output voltage produces a delay with respect to the real waveform (namely, the amplitude becomes smaller), as shown by the waveform indicated by broken lines on the Y axis in Fig. 13. Thus, if such output values are successively changed into flow rates, the detection pulsation waveform would appear as shown on the X axis of Fig. 13. As a result, the average value Q2 of the detected pulsation waveform would have an under-detection error with respect to the average value Q1 of true air flow rates. If such erroneous average value Q2 is used in the internal combustion engine, the volume of air that is detected would be smaller than the actual air volume, resulting in a decrease in the amount of fuel injected and adversely affecting fuel control.

The aforementioned thermal delay in the heating resistor is further described in the following. To measure the air flow rate in the intake pipe, it is necessary to make arrangements for removing mechanical vibrations and preventing deposition of fine dust coming through an air cleaner. Hence, it is necessary, as shown in FIG. 14, to improve the reliability of the heating resistor by winding the heating wire of the heating resistor around a bobbin-like member so as to enhance the mechanical strength of the heating resistor, and by coating the wiring with glass material or the like so as to reduce the deposition of dust. Such measures, however, require heating not only the heating wire but also the bobbin-like member and coating material. Because neither the bobbin member nor the coating material have electric properties similar to those of the heating wire, the thermal capacity required for heating them via heating wire increases, resulting in the aforementioned thermal delay in the heating resistor. As a result, due to a thermal delay of the heating resistor, measurement delays occur with respect to the true intake air pulsation. Air flow rate values obtained by successively converting such delayed output voltage inevitably contain measurement errors.

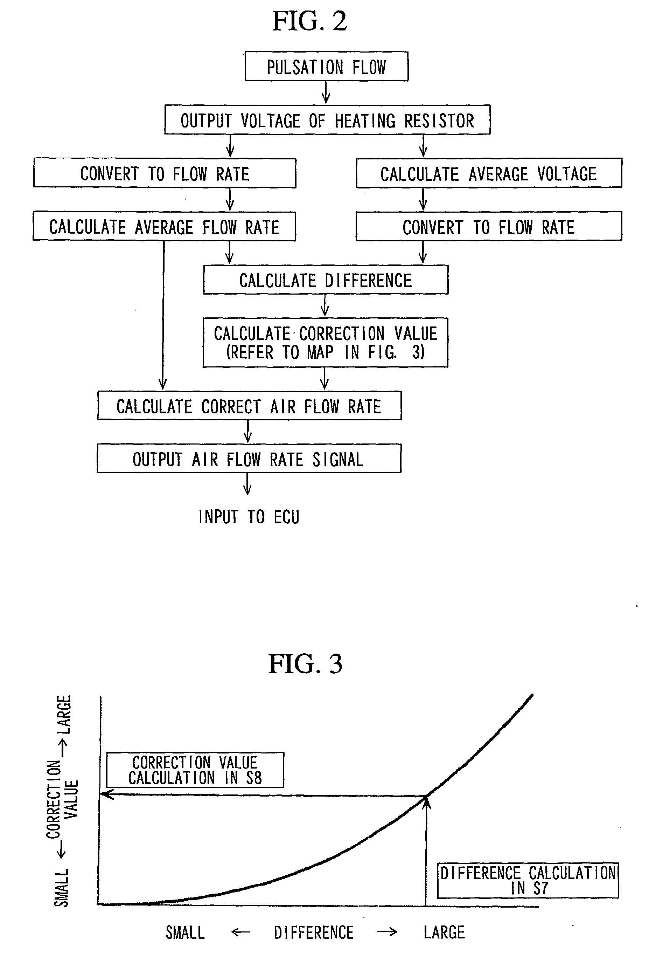

To correct the measurement errors described above, the electronic circuit unit 200 shown in FIG. 1 executes a process ranging from steps S3 through S10 shown in FIG. 2.

Step S1 shown in FIG. 2 represents a state in which a pulsation flow (air flow) generated in the intake pipe is being measured by the sensing circuit 100. In step 2, the output voltage V2 of the sensing circuit 100 is outputted into two branches of processing so as to convert the output voltage to flow rate values concurrently by two methods.

In one of the two methods, as shown in step S3, the output voltage is sampled at prescribed time intervals (the sampling interval time is required to be short, say 4 ms or less, or more preferably 1 to 2 ms, to enable extraction of a pulsation waveform), and the sampled output voltages are successively converted to flow rate values. The flow rate values thus obtained in a prescribed amount of time are averaged in step S4. The average value thus obtained is determined as a first flow rate value.

In the other of the two methods, as shown in step S5, an average value of the output voltage V2 during a prescribed amount of time is calculated in advance. The average output voltage value thus obtained is then converted, as shown in step S6, to a flow rate value, that is, a second flow rate value. In steps S6 and S3, voltage values are converted to flow rate values, for example, by using a map.

Subsequently, the difference between the first and second flow rate values (average flow rate values) obtained in steps S4 and S6 is calculated (step S7). Based on the difference value, a measurement error correction value is determined, for example, using a map (showing relationship between difference values and error values, as shown in FIG. 3) (step S8). A function (y = f(x)) which represents the relationship between difference values and error values as shown in FIG. 3 may be established, and measurement errors may be calculated using the function.

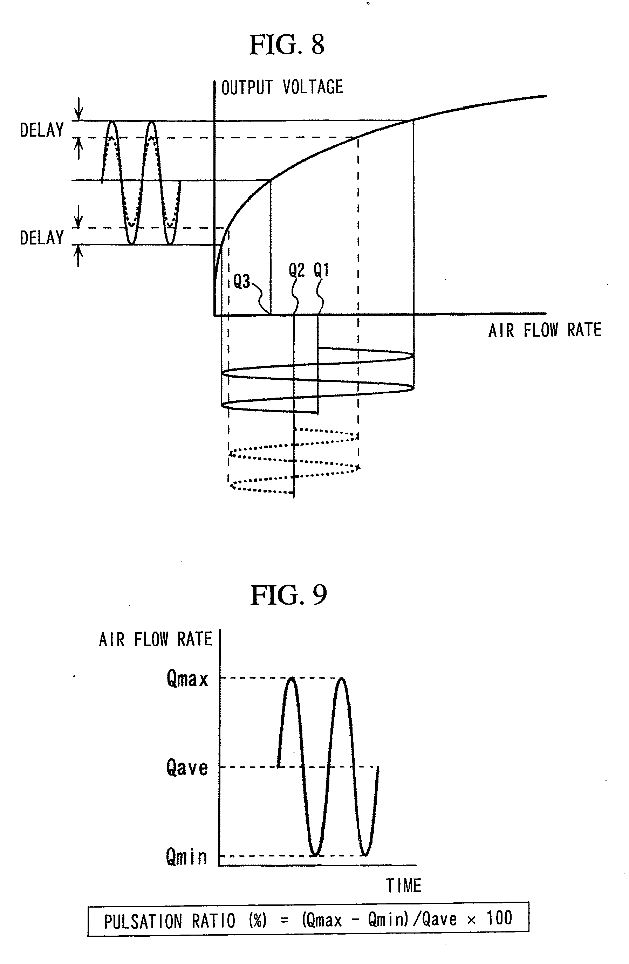

In FIG. 10, the dotted-line curve shows measurement errors determined by a method in which average output voltage values are converted to average flow rate values, and the solid-line curve shows measurement errors determined by a method in which average flow rate values are calculated from successive flow rate values converted from successive output voltage values. The horizontal and vertical axes in FIG. 10 represent the air flow pulsation ratio and the measurement error, respectively. The pulsation ratio is, as shown in FIG. 9, defined as an indicator of pulsation magnitude. Namely, as shown in FIG. 9, the pulsation ratio represents the ratio of the pulsation amplitude to the average flow rate. When the pulsation becomes larger relative to the average flow rate, the pulsation ratio also becomes larger.

As shown in FIG. 10, the measurement error of the heating resistor type air flow rate measuring device becomes larger corresponding to the pulsation ratio. The difference (measurement error) between the first and second flow rate values obtained by the foregoing two conversion methods also becomes larger corresponding to the pulsation ratio. Therefore, the difference between the two flow rate values and the measurement error of the heating resistor type air flow rate measuring device are uniquely determined. Hence, it is possible to obtain a graph, for example, as shown in FIG. 3. Creating a map or establishing a formula based on the graph makes it possible to calculate correction values for correcting measurement errors of the heating resistor type air flow rate measuring device.

In step S9, correction processing is performed using the correction value obtained in step S8. The correction processing includes, for example, adding the correction value to the flow rate value obtained in step S4. The air flow rate value thus corrected is finally outputted to an engine control unit (ECU) as an air flow rate signal for fuel injection control (step S10).

The electronic circuit unit 200 shown in FIG. 1 executes a process ranging from steps S3 to S10. In the electronic circuit unit 200, an average voltage calculation section 201a executes the step S5 mentioned above. It is made of a smoothing filter including a capacitor and a resistor. A conversion-to-flow-rate section 201b executes step S6. These elements 201a and 201b make up a conversion-to-flow-rate method 201 out of the two methods. A successive-conversions-to-flow-rate section 202a executes the step S3 mentioned above. An average flow rate calculation section 202b executes step S4. These elements 202a and 202b make up the other conversion-to-flow-rate method 202 out of the two methods. A difference calculation section 203 executes step S7. A correction processing section 204 executes steps S8 to S10.

The above system is superior in that measurement errors are estimated using a difference between flow rate values calculated by the two methods and an actual waveform representing, for example, the pulsation amplitude ratio of the heating resistor type air flow rate measuring device, and that the estimated measurement errors are used to correct measurement values. The pulsation amplitude ratio does not increase unless the pulsation amplitude actually becomes larger.

According to the present invention, even in cases where the length of an intake pipe is changed in a vehicle development stage resulting in a change in natural frequency and thereby causing an area to be affected by a pulsation flow to be shifted, it is not necessary, unlike in conventional cases, to perform recalibration.

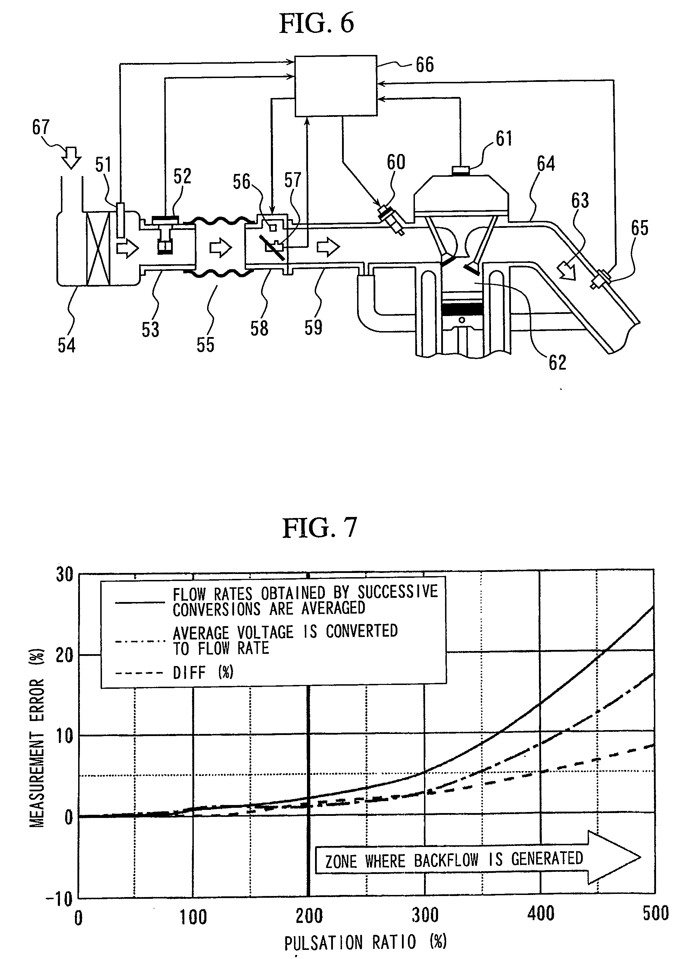

A technique has been known in which, as a measure to cope with minus errors of a heating resistor type air flow rate measuring device attributable to nonlinearity of its output voltage and generation of a pulsation flow, a heating resistor is disposed in a curved subsidiary air passage. As a measure against minus errors, the technique is effective to a certain extent, but there has been a problem with the technique that no measures are taken to cope with plus errors attributable to a backflow. According to the present invention, however, it is possible to correct measurement errors attributable to a backflow, too. The graph shown in FIG. 7 shows results of measurement made by applying the present invention, with a heating resistor disposed in a curved passage and a pulsation flow including a backflow. Where the pulsation ratio, represented by the horizontal axis, is 200% or less, no backflow is present and no minus errors are observed thanks to the use of a curved passage. Where the pulsation ratio exceeds 200% with a backflow being present, the results of measurement made using the two conversion-to-flow rate methods according to the present invention are clearly different from measurement results obtainable by conventional methods. Thus, calculating a difference between flow rate values measured by the two methods makes it possible to estimate the pulsation ratio and correct measurement errors even in cases where the pulsation flow includes a backflow.

Pulsation-induced measurement errors of a heating resistor type air flow rate measuring device occur in a state where the engine revolution rate is relatively low and the air flow rate is also low. Therefore, it is considered that measurement correction values laid out on a one-dimensional map are good for correcting measurement values based on differences between flow rates obtained by the two methods. Depending on a vehicle (engine), however, measurement errors may occur in a state where the engine revolution rate is high and the air flow rate is also high. In such a case, measurement errors of a heating resistor type air flow rate measuring device may depend on the pulsation frequency. In cases where the measurement error dependency on the pulsation frequency cannot be ignored, three-dimensional maps, each for a flow rate, of measurement correction values are to be prepared with the engine revolution period (frequency) taken into account in addition to the differences between flow rates.

FIG. 6 shows an example of an embodiment in which the present invention is applied to an internal combustion engine of an electronic fuel injection type.

Intake air 67 taken in through an air cleaner 54 enters an engine cylinder 62 via a body 53 of a heating resistor type air flow rate measuring device, an intake duct 55, a throttle body 58, and an intake manifold 59 provided with an injector 60 to which fuel is fed. Gas 63 generated in the engine cylinder is discharged via an exhaust manifold 64.

Signals such as an air flow rate signal outputted from a circuit module 52 (equivalent to a sensing circuit 100 and the electronic circuit unit 200 shown in FIG. 1) of the heating resistor type air flow rate measuring device, an intake air temperature signal outputted from a temperature sensor, a throttle valve angle signal outputted from a throttle valve angle sensor 57, an oxygen concentration signal outputted from an oxygen meter provided in the exhaust manifold 64, and an engine revolution rate signal outputted from an engine tachometer 61 are inputted to a control unit 66. The control unit 66 determines an optimum amount of fuel injection and an optimum opening of an idle air control valve by successively processing these input signals, and controls the injector 60 and the idle control valve 56 using the optimum values thus determined.

Application of the present invention is not limited to cases where the above two conversion-to-flow-rate methods are used. The present invention can be applied to cases where other conversion-to-flow-rate methods are available to obtain a difference value similar to that obtained using the above two methods. Furthermore, in applying the present invention, measurement errors may be determined based on information obtained using more than two conversion-to-flow-rate methods.

Even though a main area of application of the present invention will be vehicle control, it can also be applied to cases where control is performed using a diesel engine for ships or power generators.

The above mentioned features and embodiments may be combined partly or as a whole in any way.

## Claims

1. A method of correcting a measurement error of an air flow rate measuring device which measures an air flow rate using a temperature-dependent heating resistor (101), wherein:
an output from a sensing circuit (100) including the heating resistor (101) are converted to flow rate values by two or more methods; and
the measurement error is corrected based on a difference between the flow rate values obtained by the two or more methods.

2. The method according to claim 1, wherein:
the output is converted to flow rate values concurrently by the two or more methods;
a correction value for correcting the measurement error is determined based on a difference between the flow rate values obtained by the two or more methods; and
a corrected flow rate value is determined by adding the correction value to one of the flow rate values obtained by the two or more methods.

3. The method according to claim 1 or 2, wherein:
the output from the sensing circuit (100) including the heating resistor (101) is converted to flow rate values by two methods;
a correction value for correcting the measurement error is determined based on a difference between the two flow rate values obtained by the two methods; and
a corrected flow rate value is determined by adding the correction value to one of the two flow rate values.

4. The method according to at least one of claims 1-3, wherein:
(1) in one of the two methods, the output from the sensing circuit (100) is sampled at prescribed time intervals, output values thus sampled are successively converted to flow rate values, and a first flow rate value is determined by averaging the flow rate values thus obtained in a prescribed amount of time;
(2) in the other of the two methods, the output from the sensing circuit (100) is averaged for a prescribed amount of time, an average output value thus obtained is converted to a second flow rate value; and
a correction value for correcting the measurement error is determined based on a difference between the first and second flow rate values.

5. The method according to at least one of claims 1-4, wherein the measurement error is corrected based on the flow rate values obtained by the two or more methods and an engine revolution rate.

6. An air flow rate measuring device which measures an air flow rate using a temperature-dependent heating resistor (101), comprising;
a sensing circuit (100) including the heating resistor (101), and
a correction part that converts an output from the sensing circuit (100) to flow rate values by concurrently performing two or more methods and that corrects a measurement error of the air flow measuring instrument based on a difference between the flow rate values obtained by the two or more methods.

7. The air flow rate measuring device according to claim 6, wherein the correction part converts the output from the sensing circuit (100) to flow rate values by two methods, determines a correction value for correcting the measurement error based on a difference between the flow rate values thus obtained, and determines a corrected flow rate value by adding the correction value to one of the flow rate values.

8. The air flow rate measuring device according to claim 6 or 7, wherein: the correction part converts the output to flow rate values by two methods;
(1) in one of the two methods, the output from the sensing circuit (100) is sampled at prescribed time intervals, output values thus sampled are successively converted to flow rate values, and a first flow rate value is determined by averaging the flow rate values thus obtained in a prescribed amount of time;
(2) in the other of the two methods, the output from the sensing circuit (100) is averaged for a prescribed amount of time, an average output value thus obtained is converted to a second flow rate value; and
a correction value for correcting the measurement error is determined based on a difference between the first and second flow rate values.

9. The air flow rate measuring device according to at least one of claims 6-8, wherein the correction part is provided with a map or a relational expression used to determine a correction value for correcting the measurement error based on a difference between the first and second flow rate values.

10. The air flow rate measuring device according to at least one of claims 6-9, wherein the first flow rate value is obtained via a smoothing filter.

11. The air flow rate measuring device according to at least one of claims 6-10, wherein the correction part is provided in an engine control unit (66) or in a special control unit for air flow rate measuring device.
